# EUROPÄISCHE PATENTSCHRIFT

(11) **EP 4 099 222 B1**
(45) Veröffentlichungstag und Bekanntmachung des Hinweises auf die Patenterteilung: **02.12.2026**
(21) Anmeldenummer: 22175005.2
(22) Anmeldetag: 24.05.2022
(51) Int. Cl.: G06K 19/077, B42D 25/23, G06K 19/06, G07F 7/08

(54) **KARTE UND VERFAHREN ZUR HERSTELLUNG EINER KARTE**
CARD AND METHOD FOR PRODUCING A CARD
CARTE ET PROCÉDÉ DE FABRICATION D'UNE CARTE

(30) Priorität: 01.06.2021 DE 102021114246
(43) Veröffentlichungstag der Anmeldung: 07.12.2022
(73) Patentinhaber: Bundesdruckerei GmbH, 10969 Berlin (DE)
(72) Erfinder: Muth, Oliver, 12277 Berlin (DE); Dorschan, Lydia, 12047 Berlin (DE)
(74) Vertreter: Hentrich Patent- & Rechtsanwaltspartnerschaft mbB

(56) Entgegenhaltungen:
- WO-A1-02/22376
- WO-A2-03/102713
- US-A- 6 019 284
- US-A1- 2005 247 794
- US-A1- 2010 025 477
- US-A1- 2010 026 943
- US-A1- 2014 097 253
- US-A1- 2016 039 241
- US-A1- 2018 039 877
- US-A1- 2018 194 158

## Beschreibung

Die Erfindung betrifft eine Karte mit einem eine Oberseite, eine Unterseite und eine die Oberseite mit der Unterseite verbindende Kartenkante umfassenden Kartenkörper, der einen stoffschlüssig mit einem nichttransparenten Kartengrundkörper verbundenen transparenten Materialabschnitt aufweist. Die Erfindung betrifft außerdem ein Ausweis-, Wert- oder Sicherheitsdokument in Form einer solchen Karte sowie ein Verfahren zur Herstellung einer derartigen Karte.

Aus der DE 10 2016 201 976 A1 sind ein Verfahren und eine Vorrichtung bekannt, die ein Fenster in einen Kartenkörper einbringen, das danach mit einem Füllmaterial verfüllt wird, wobei ein Doppelstempel Einsatz findet, um einerseits eine Ausnehmung in einem Substrat zu erzeugen und um andererseits eine an die Ausnehmung angepasste Füllung aus einem weiteren Substrat zu stanzen, um diese anschließend in die Ausnehmung einzusetzen.

In der DE 10 2016 203 609 A1 ist ein Sicherheitsgegenstand mit einem dynamischen und statischen Fenstersicherheitsmerkmal sowie ein Verfahren zu dessen Herstellung angegeben. Hierbei wird ein betrachtungswinkelabhängiges Sicherheitsmerkmal hergestellt, welches die Fälschungssicherheit des Dokuments erhöht. Hier liegt eine Art Fenster vor.

In der DE 10 2016 217 044 A1 wird ein Verfahren vorgestellt, bei dem ein Stanzstempel mit einem Stößel versehen ist, um zunächst aus einem Substrat eine Ausnehmung auszustanzen, wobei das ausgestanzte Material von dem Stößel aus dem Stempel gedrückt wird, um dann aus einem weiteren Substrat ein weiteres Element auszustanzen, welches dann in die zuvor erzeugte Ausnehmung des ersten Substrats eingesetzt wird.

Aus der EP 3 095 075 A1 sind ein Verfahren und eine Einrichtung zur Bearbeitung eines Substrats bekannt, bei dem ein einziger Stempel Einsatz findet, um einerseits die Ausnehmung aus dem Substrat zu schneiden und andererseits das Füllmaterial aus einem Füllmaterialsubstrat zu stanzen, welches mittels des Stempels dann in die zuvor erzeugte Ausnehmung eingesetzt wird.

Auch in der DE 10 2019 104 380 A1 ist ein Wert- oder Sicherheitsdokument mit einem Fenster beschrieben, welches gebildet ist durch eine Ausstanzung in einer innenliegenden Schicht, in welche ein Sicherheitshologramm eingesetzt ist, welches auf ein Format gestanzt ist, das der Ausstanzung entspricht.

In der DE 10 2019 122 128 A1 wird ein kartenförmiges Ausweis-, Wert oder Sicherheitsdokument angegeben, bei dem ebenfalls ein Fenster vorliegt, dessen Schnittkanten nicht durch einen Stanzvorgang, sondern durch einen Laserschnitt zustande gekommen sind, wodurch unterschiedliche Neigungswinkel bezüglich der Oberflächennormale der Oberseite oder der Unterseite möglich sind.

In der nicht vorveröffentlichten deutschen Anmeldung DE 10 2020 212 977 ist ebenfalls ein Wert- oder Sicherheitsdokument mit einem Fenster gezeigt, wobei das transparente Material mit einem Materialausleger versehen ist, der zwischen zwei opaken Schichten aufgenommen ist.

In der WO 02/ 22 376 wird eine mehrschichtige Karte beschrieben, bei der ein Sicherheitsdruckbild visuell sichtbar angebracht ist. Dabei besteht die Karte aus einer obersten Schicht als Kartenvorderseite, die aus einem transparenten Kunststoff gebildet ist. Die unterste Schicht ist ebenfalls transparent und bildet die Kartenrückseite. Innenliegend ist eine weitere transparente Schicht vorhanden, wobei auch eine undurchsichtige Schicht im Laminat vorliegt. Die transparenten Schichten erstrecken sich bis an die Kartenkante, wobei die Kartenkante abschnittsweise transparent gebildet ist.

Auch die US 2005 / 0 247 794 A1 zeigt einen mehrschichtigen Aufbau, wobei sich zwei der Schichten bis zur Kartenkante lateral erstrecken und transparent sind.

In der US 2016 / 0 039 241 A1 ist eine Banknote beschrieben, die mit einem streifenförmigen Fensterbereich gebildet ist, der sich bis zur Seitenkante der Banknote erstreckt.

In der US 6,019,284 A wird eine Chipkarte beschrieben, die ebenfalls einen mehrschichtigen Aufbau besitzt. Die US 2010 / 0 025 477 A1 zeigt ein mehrschichtiges Sicherheitsdokument, das mit einer transparenten innenliegenden Schicht gebildet ist. Auch in der US 2018 / 0 194 158 A1 wird ein Sicherheitsdokument beschrieben, das einen mehrschichtigen Aufbau mit einer Antenne und einem Chip besitzt. In der US 2010 / 0 026 943 A1 wird eine Smartcard beschrieben, die einen mehrschichtigen Kartenaufbau besitzt. Auch in der US 2018 / 0 039 877 A1 wird ein mehrschichtiger Kartenaufbau gezeigt, in den eine Antennenspule eingebettet ist, wobei ein transparenter Abschnitt vorhanden ist, der sich zwischen einem nicht-transparenten Abschnitt befindet. In der WO 03 / 102 713 A2 wird eine transparente Karte beschrieben, in die eine Elektronikeinheit eingebettet ist. Weiter wird in der US 2014 / 0 097 253 A1 eine Smartcard beschrieben, in die ebenfalls ein elektronischer Chip und eine Antenne eingebettet sind.

Es ist die Aufgabe der vorliegenden Erfindung, eine Karte, ein Ausweis-, Wert- oder Sicherheitsdokument mit oder aus einer solchen sowie ein Verfahren zur Herstellung einer Karte anzugeben, bei denen ein nicht vollständig gerahmtes transparentes Sicherheitsmerkmal vorliegt, das verbessert vor Fälschungen schützt.

Diese Aufgabe wird gelöst durch die Gegenstände der unabhängigen Ansprüche.

Vorteilhafte Ausgestaltungen mit zweckmäßigen Weiterbildungen der Erfindung sind in den abhängigen Ansprüchen angegeben.

Damit liegt ein neuartiges Sicherheitsmerkmal bei der Karte vor, da ein transparenter Materialabschnitt randseitig vorliegt, wodurch dieser nicht vollständig von Material gerahmt ist. Außerdem besteht die Möglichkeit, dass der transparente Materialabschnitt ausschließlich an einem Teilbereich der Kartenkante vorliegt, so dass die übrige Kartenkante opakes Material des Kartengrundkörpers aufweist. Alternativ kann der transparente Materialabschnitt den Kartenkörper insgesamt umrahmen, so dass die Kartenkante selbst insgesamt aus dem transparenten Material besteht.

Als "transparent" ist im Rahmen dieser Offenbarung ein einschichtiges oder mehrschichtiges Material zu verstehen, durch das mit dem bloßen menschlichen Auge hindurchgesehen werden kann; es somit wenigstens Licht im sichtbaren Wellenlängenbereich hindurchlässt. Der Transmissionsgrad liegt dabei vorzugsweise bei wenigstens 75 Prozent, insbesondere bei wenigstens 80 Prozent. Solche Transmissionsgrade haben sich insbesondere bei der Nutzung von Licht im Wellenlängenbereich von 200 Nanometern bis 800 Nanometern als zweckmäßig erwiesen.

Obwohl der transparente Materialabschnitt lateral nicht oder auch unvollständig gerahmt ist, so kann er dennoch mit einer oder mit mehreren Decklagen des Kartenkörpers bedeckt sein, die ihn dadurch zusätzlich am Kartengrundkörper sichern.

Die Fälschungssicherheit der Karte lässt sich erhöhen, wenn der transparente Materialabschnitt einen Teil einer Ecke des Kartenkörpers bildet. So kann die Position des transparenten Materialabschnitts ebenfalls zur Fälschungssicherheit beitragen, wenn diese personenspezifisch und/oder dokumentenspezifisch gewählt ist.

Zur Fälschungssicherheit trägt erfindungsgemäß bei, wenn der transparente Materialabschnitt asymmetrisch geformt ist. Diese Asymmetrie kann beispielsweise ebenfalls an personenspezifische und/oder dokumentenspezifische Informationen auf der Karte selbst angepasst sein, sodass die Formgebung aufgrund der gewählten Asymmetrie Rückschlüsse auf weitere an der Karte befindliche Referenzinformation bietet. Außerdem kann das transparente Material des transparenten Materialabschnitts an der Kartenkante einen anderen haptischen Eindruck vermitteln, als das Material an der Kartenkante des Kartengrundkörpers. Auch daraus lassen sich Rückschlüsse auf den Typ der Karte oder auch auf personen- und/oder dokumentenspezifische Informationen treffen.

Da derartige Karten bei der Herstellung üblicherweise in einem Bogen bereitgestellt sind, aus welchem die Nutzen vereinzelt werden, hat es sich im Hinblick auf die Schnitt- oder Stanzreste als vorteilhaft erwiesen, wenn der transparente Materialabschnitt eine Längserstreckung aufweist, die größer ist als seine Erstreckung in der Breite, und wenn der transparente Materialabschnitt entlang seiner Längserstreckung an einer langen Kante des Kartenkörpers angeordnet ist.

Alternativ besteht die Möglichkeit, dass auch dann weniger Verschnittreste vorliegen, wenn der transparente Materialabschnitt eine Längserstreckung aufweist, die größer ist als seine Erstreckung in der Breite, und wenn der transparente Materialabschnitt entlang seiner Längserstreckung an einer kurzen Kante des Kartenkörpers angeordnet ist.

Üblicherweise wird der Kartenkörper unter Einwirkung von Druck und Wärme zu einem untrennbaren Verbund gefügt. In diesem Zuge kann daher an der Schnittstelle des transparenten Materialabschnitts und des Kartengrundkörpers eine stoffschlüssige Verbindung entstehen. Um diese Verbindung zusätzlich zu festigen, hat es sich als vorteilhaft erwiesen, wenn der transparente Materialabschnitt darüber hinaus einen Materialausleger umfasst, der in den Kartengrundkörper eingebettet ist. Beim Laminieren der Einzellagen wird also ein Teil des transparenten Materials, nämlich der Materialausleger, zwischen die weiteren opaken Schichten des Kartenkörpers eingebettet, sodass ein noch besserer Verbund zwischen dem transparenten Materialabschnitt und dem restlichen opaken Kartengrundkörper entsteht.

Es hat sich als vorteilhaft erwiesen, wenn die Karte ein Ausweis-, Wert- oder Sicherheitsdokument bildet oder ein Bestandteil von einem solchen ist. Die in Verbindung mit der erfindungsgemäßen Karte genannten Vorteile, vorteilhaften Gestaltungen und Wirkungen gelten in gleicher Weise für das erfindungsgemäße Ausweis-, Wert- oder Sicherheitsdokument.

Die in Verbindung mit der erfindungsgemäßen Karte genannten Vorteile, vorteilhaften Gestaltungen und Wirkungen gelten in gleicher Weise auch für das erfindungsgemäße Verfahren zur Herstellung einer solchen Karte.

Somit liegt also auch am Ende des Verfahrens eine Karte vor, die einen transparenten Materialabschnitt an ihrer Kartenkante aufweist, der somit nicht vollständig von opaken Material umrahmt ist.

Es hat sich als vorteilhaft erwiesen, wenn der Substratverbund derart abgelängt wird, dass der transparente Materialabschnitt einen Teil einer Ecke eines Kartenkörpers bildet.

In diesem Zuge ist es erfindungsgemäß vorgehsehen, dass der Substratverbund derart abgelängt wird, dass der transparente Materialabschnitt asymmetrisch vorliegt.

Es ist die Möglichkeit gegeben, dass wenigstens eine transparente Decklage appliziert wird, bevor die Karte auf ihr Endmaß abgelängt, insbesondere gestanzt wird.

Vorzugsweise liegt die Karte in ID 1-, ID 2-, ID 3- oder in irgendeinem anderen Format vor. Sie kann auch Bestandteil eines Heftes sein, wie bei einem passähnlichen Gegenstand. Die Karte ist im Allgemeinen ein Laminat aus mehreren Dokumentenlagen, die beispielsweise unter Wärmeeinwirkung und unter erhöhtem Druck flächig miteinander verbunden sind. Diese Produkte sollen den normierten Anforderungen genügen, beispielsweise ISO 10373, ISO/IEC 7810, ISO 14443.

Vorzugsweise bestehen die Kartenlagen des Kartengrundkörpers aus einem Trägermaterial, das sich für eine Lamination eignet. Die Karte kann aber vorzugsweise aus einem Polymer gebildet sein, das ausgewählt ist aus einer Gruppe, umfassend Polycarbonat (PC), insbesondere Bisphenol A-Polycarbonat oder ein Polycarbonat, gebildet mit einem geminal disubstituierten Bis-(hydroxyphenyl)-cycloalkan, Polyethylenterephthalat (PET), deren Derivate, wie Glykol-modifiziertes PET (PETG), Polyethylennaphthalat (PEN), Polyvinylchlorid (PVC), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polyethylen (PE), thermoplastische Elastomere (TPE), insbesondere thermoplastisches Polyurethan (TPU), Acrylnitril-Butadien-Styrol-Copolymer (ABS) sowie deren Derivate, und/oder Papier und/oder Pappe und/oder Glas und/oder Metall und/oder Keramik. Außerdem kann die Karte auch aus mehreren dieser Materialien hergestellt sein. Bevorzugt besteht sie aus PC oder PC/TPU/PC. Die Polymere können entweder gefüllt oder ungefüllt vorliegen. Im Falle des transparenten Materialabschnitts sind sie ungefüllt und liegen deshalb (teil-)transparent vor. Falls die Polymere gefüllt sind, sind sie opak und eignen sich für die Lagen des nichttransparenten Kartengrundkörpers. Die vorstehenden Angaben beziehen sich sowohl auf miteinander zu verbindende Folien als auch auf Flüssigformulierungen, die auf ein Vorprodukt aufgebracht werden, wie einen Schutz- oder Decklack. Bevorzugt wird die Karte aus drei bis zwölf, vorzugsweise vier bis zehn Folien, hergestellt. Die Folien können ferner Druckschichten tragen. Ein solcherart gebildetes Laminat kann abschließend ein- oder beidseitig mit dem Schutz- oder Decklack oder mit einer Folie überzogen werden. Die Folie kann insbesondere eine Kratzschutzfolie sein. Derart gebildete Overlaylagen schützen ein darunter angeordnetes Sicherheitsmerkmal und/oder verleihen der Karte die erforderliche Abriebfestigkeit.

Weitere Merkmale, Eigenschaften und Vorteile der vorliegenden Erfindung werden im Folgenden anhand von Ausführungsvarianten unter Bezugnahme auf die beigefügten Figuren näher beschrieben. Alle bisher und im Folgenden beschriebenen Merkmale sind dabei sowohl einzeln als auch in einer beliebigen Kombination miteinander vorteilhaft. Die im Folgenden beschriebenen Ausführungsvarianten stellen lediglich Beispiele dar, welche den Gegenstand der Erfindung jedoch nicht beschränken. Dabei zeigen:
- Figur 1: eine perspektivische Ansicht auf eine Karte,
- Figur 2: das Detail A aus Figur 1 mit einem transparenten Materialabschnitt, der ohne einen Materialausleger gebildet ist,
- Figur 3: eine schematische Schnittansicht durch einen Bogen im Bereich der Karte, vor ihrem Ablängen oder Vereinzeln aus dem Bogen,
- Figur 4: eine der Figur 3 entsprechende Darstellung, bei der der transparente Materialabschnitt mit einem Materialausleger gebildet ist,
- Figur 5: eine der Figur 2 entsprechende Darstellung, bei der der transparente Materialabschnitt mit einem Materialausleger gebildet ist,
- Figur 6: eine schematische Draufsicht auf eine Karte, die noch nicht vereinzelt wurde, bei welcher der transparente Materialabschnitt an einer kurzen Kante der Karte angeordnet ist,
- Figur 7: eine der Figur 6 entsprechende Darstellung, bei welcher der transparente Materialabschnitt an einer langen Kante der Karte angeordnet ist, und
- Figur 8: eine der Figur 3 entsprechende Darstellung der einzelnen Herstellschritte zur Fertigung einer weiteren Karte.

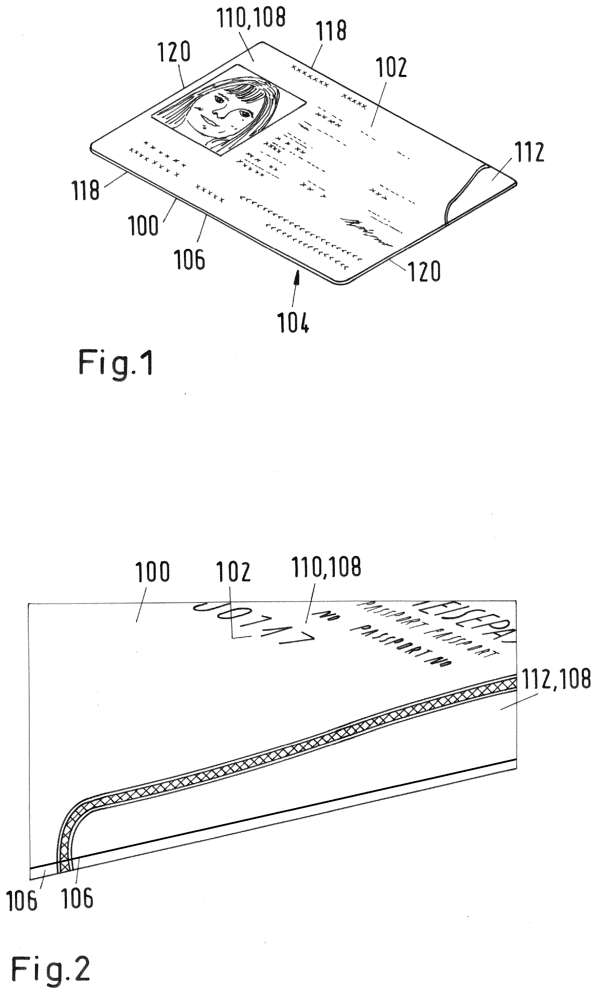

In der Figur 1 ist eine Karte 100 mit einem eine Oberseite 102, eine Unterseite 104 und eine die Oberseite 102 mit der Unterseite 104 verbindende Kartenkante 106 umfassenden Kartenkörper 108 gezeigt. Der Kartenkörper 108 umfasst einen nichttransparenten Kartengrundkörper 110. Außerdem umfasst der Kartenkörper 108 einen transparenten Materialabschnitt 112, der stoffschlüssig mit dem nichttransparenten Kartengrundkörper 110 verbunden ist. Der transparente Materialabschnitt 112 bildet einen Teil der Kartenkante 106. Vorliegend bildet der transparente Materialabschnitt 112 sogar einen Teil einer Ecke des Kartenkörpers 108. Außerdem ist der transparente Materialabschnitt 112 asymmetrisch geformt.

Die stoffschlüssige Verbindung zwischen dem transparenten Materialabschnitt 112 und dem nichttransparenten Kartengrundkörper 110 kommt durch die Lamination der einzelnen Lagen des Kartenkörpers 108 zustande.

Ausweislich von Figur 2 genügt dabei die Kante des transparenten Materialabschnitts 112 aus, um eine stoffschlüssige Verbindung mit der Kante des Kartengrundkörpers 110 auszubilden.

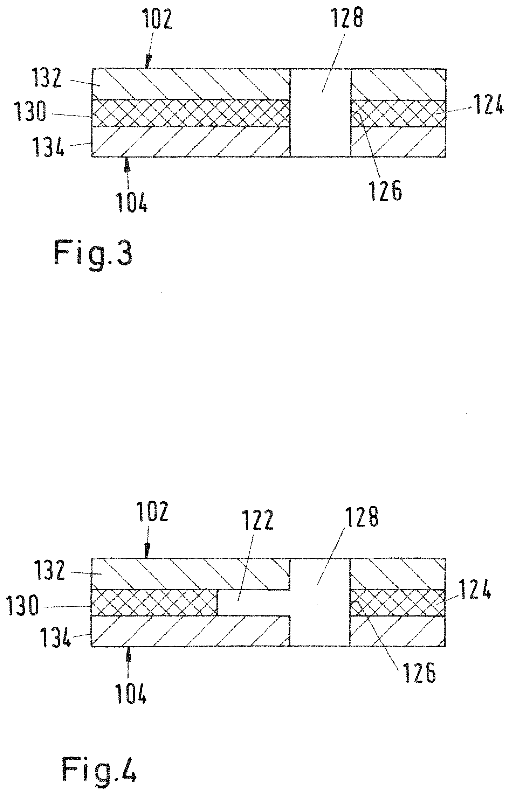

In der Schnittansicht nach Figur 3, die die Karte 100 noch vor ihrem Ablängen auf das Endmaß zeigt, wird ersichtlich, dass das Kernmaterial 130 des Kartengrundkörpers 110 opak gestaltet ist, wobei lediglich im Bereich des transparenten Materials 128 eine Durchsicht durch den noch nicht abgelängten Kartenkörper 108 möglich ist. Das Kernmaterial 130 und das transparente Material 128 werden dabei beispielsweise durch eine obere Decklage 132 und eine untere Decklage 134 bedeckt, was den Verbund zusätzlich stärkt. Diese beiden Decklagen 132, 134 sind dabei vorzugsweise ebenfalls transparent gebildet.

Um bei mechanischer Beanspruchung der Karte 100 zu vermeiden, dass der transparente Materialabschnitt 112 vom Kartengrundkörper 110 getrennt wird, ist ausweislich von Figur 4 die Möglichkeit vorhanden, dass das transparente Material 128 mit einem Materialausleger 122 versehen ist, das in den Kartengrundkörper 110 eingebettet ist. Somit wird es also durch die Decklagen 132, 134 nach oben bzw. nach unten gesichert, wobei es durch die Kernlage 130 eine laterale Sicherung erfährt. Auf diese Weise wird also nach dem Ablängen auf das Endmaß der Karte 100 eine zusätzliche Fixierung über den Materialausleger 122 geboten.

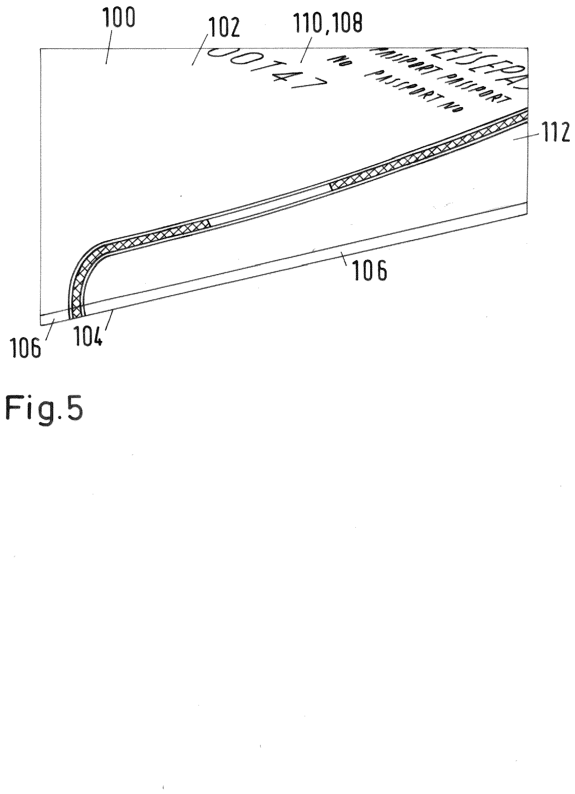

Die Ansicht nach Figur 5 zeigt, dass auch der Materialausleger 122 nach der Fixierung sichtbar bleibt, sodass auch über diesen eine Sicherheitsfunktion oder ein Sicherheitsmerkmal in die Karte 100 eingebracht werden kann. Beispielweise kann die Anzahl solcher Materialausleger 122 spezifisch für die jeweilige Karte 100 sein. Liegt eine falsche Anzahl an solchen Materialauslegern 122 vor, so lässt dies auf eine Fälschung der Karte 100 schließen.

Die Karte 100 wird gemäß den folgenden Schritten hergestellt:
- Bereitstellen eines nichttransparenten Substrats 124,
- Einbringen einer Ausnehmung 126 in das nichttransparente Substrat 124,
- Bereitstellen eines an die Ausnehmung 126 im nichttransparenten Substrat 124 angepasstes transparentes Material 128,
- Einsetzen des transparenten Materials 128 in die Ausnehmung 126 im nichttransparenten Substrat 124,
- stoffschlüssiges Verbinden des transparenten Materials 128 mit dem nichttransparenten Substrat 124 zu einem Substratverbund, insbesondere in einem Bogen mit mehreren solcher Karten 100, und
- Ablängen des Substratverbunds auf eine Kartengröße derart, dass ein transparenter Materialabschnitt 112 des transparenten Materials 128 einen Teil der Kartenkante 106 bildet.

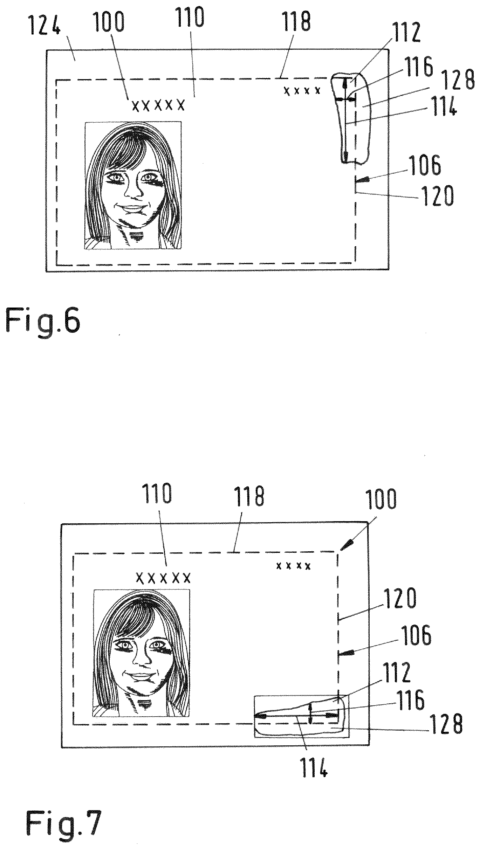

In Figuren 6 und 7 ist dieser Substratverbund noch vor seinem Ablängen auf Kartengröße gezeigt. Die vorgesehene Schnittkante, Stanzkante oder Laserkante ist dabei gestrichelt eingezeichnet.

In beiden Fällen wird der Substratverbund derart abgelängt, dass der transparente Materialabschnitt 112 einen Teil einer Ecke des Kartenkörpers 108 bildet. Außerdem wird der Substratverbund derart abgelängt, dass der transparente Materialabschnitt 112 asymmetrisch vorliegt.

Ausweislich von Figur 6 ist dabei die Möglichkeit gegeben, dass der transparente Materialabschnitt 112 eine Längserstreckung 114 aufweist, die größer ist als seine Erstreckung in der Breite 116, und dass der transparente Materialabschnitt 112 entlang seiner Längserstreckung an einer kurzen Kante 120 des Kartenkörpers 108 angeordnet ist.

Ausweislich von Figur 7 ist dabei der transparente Materialabschnitt 112 entlang seiner Längserstreckung 114 an einer langen Kante 118 des Kartenkörpers angeordnet.

Beide Varianten sind geeignet, um möglichst wenig Verschnitt nach dem Ablängen auf das Endmaß der Karte 100 zu erhalten, sodass die Anzahl zu vereinzelten Nutzen je Bogen maximiert werden kann.

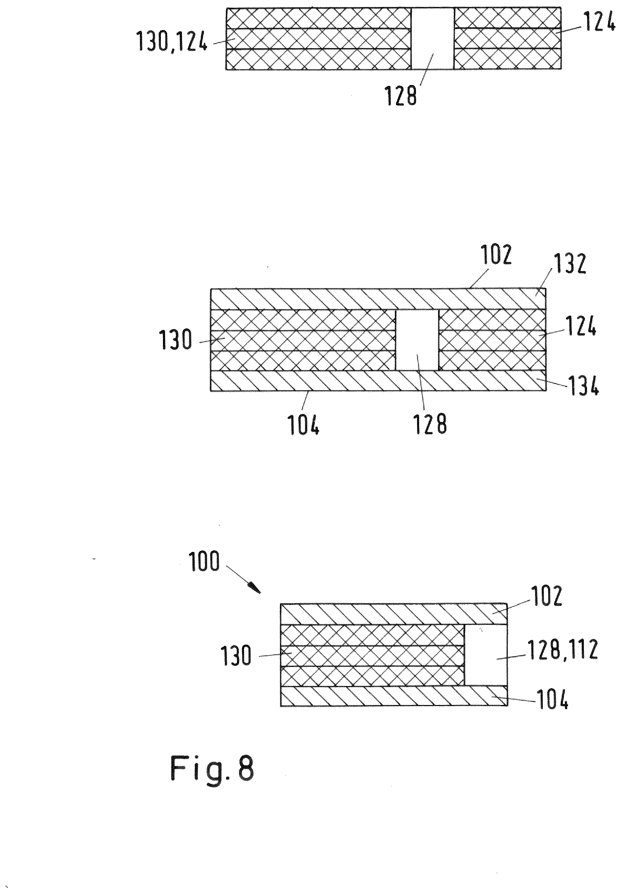

In Figur 8 wird gezeigt, wie eine mit den Decklagen 132, 134 versehene Karte 100 hergestellt wird. Zunächst wird das transparente Material 128 in den Kartengrundkörper 110 (bzw. das Kernmaterial 130 / das nichttransparente Substrat 124) eingesetzt (Darstellung oben). Anschließend wird wenigstens einseitig, vorliegend aber beidseitig, eine Decklage 132, 134 aufgebracht und zu einem Substratverbund laminiert (Darstellung mittig). Anschließend wird die Karte 100 auf ihr Endmaß abgelängt, insbesondere gestanzt, wobei die Decklagen 132, 134 den die Kartenkante 106 (zumindest teilweise) bildenden transparenten Materialabschnitt 112 am restlichen Kartengrundkörper 110 sichern (Darstellung unten).

Im Ergebnis wird durch die erfindungsgemäße Karte 100, durch das erfindungsgemäße Ausweis-, Wert- oder Sicherheitsdokument sowie durch das erfindungsgemäße Verfahren zur Herstellung der Karte 100 die Fälschungssicherheit erhöht.

### BEZUGSZEICHENLISTE

- 100: Karte
- 102: Oberseite
- 104: Unterseite
- 106: Kartenkante
- 108: Kartenkörper
- 110: Kartengrundkörper
- 112: transparenter Materialabschnitt
- 114: Längserstreckung (transparenter Materialabschnitt)
- 116: Breite (transparenter Materialabschnitt)
- 118: lange Kante (Kartenkörper)
- 120: kurze Kante (Kartenkörper)
- 122: Materialausleger
- 124: nichttransparentes Substrat
- 126: Ausnehmung
- 128: transparentes Material
- 130: Kernmaterial
- 132: Decklage, oben
- 134: Decklage, unten

## Patentansprüche

1. Karte (100) mit einem eine Oberseite (102), eine Unterseite (104) und eine die Oberseite (102) mit der Unterseite (104) verbindende Kartenkante (106) umfassenden Kartenkörper (108), der einen stoffschlüssig mit einem nichttransparenten Kartengrundkörper (110) verbundenen transparenten Materialabschnitt (112) aufweist, wobei der transparente Materialabschnitt (112) einen Teil der Kartenkante (106) bildet,
**dadurch gekennzeichnet, dass**
der transparente Materialabschnitt (112) asymmetrisch geformt ist.

2. Karte (100) nach Anspruch 1, **dadurch gekennzeichnet, dass** der transparente Materialabschnitt (112) ein Teil einer Ecke des Kartenkörpers (108) ist.

3. Karte (100) nach Anspruch 1 oder 2, **dadurch gekennzeichnet, dass** der transparente Materialabschnitt (112) eine Längserstreckung (114) aufweist, die größer ist als seine Erstreckung in der Breite (116), und dass der transparente Materialabschnitt (112) entlang seiner Längserstreckung (114) an einer langen Kante (118) des Kartenkörpers (108) angeordnet ist.

4. Karte (100) nach Anspruch 1 oder 2, **dadurch gekennzeichnet, dass** der transparente Materialabschnitt (112) eine Längserstreckung (114) aufweist, die größer ist als seine Erstreckung in der Breite (116), und dass der transparente Materialabschnitt (112) entlang seiner Längserstreckung (114) an einer kurzen Kante (120) des Kartenkörpers (108) angeordnet ist.

5. Ausweis-, Wert- oder Sicherheitsdokument in Form einer oder umfassend eine Karte (100) nach einem der Ansprüche 1 bis 4.

6. Verfahren zur Herstellung einer Karte (100), umfassend die Schritte:
- Bereitstellen eines nichttransparenten Substrats (124),
- Einbringen einer Ausnehmung (126) in das nichttransparente Substrat (124),
- Bereitstellen eines an die Ausnehmung (126) im nichttransparenten Substrat (124) angepassten transparenten Materials (128),
- Einsetzen des transparenten Materials (128) in die Ausnehmung (126) im nichttransparenten Substrat (124),
- stoffschlüssiges Verbinden des transparenten Materials (128) mit dem nichttransparenten Substrat (124) zu einem Substratverbund, und
- Ablängen des Substratsverbunds auf eine Kartengröße derart, dass ein transparenter Materialabschnitt (112) des transparenten Materials (128) einen Teil der Kartenkante (106) bildet,
**dadurch gekennzeichnet, dass** der
Substratverbund derart abgelängt wird, dass der transparente Materialabschnitt (112) asymmetrisch vorliegt.

7. Verfahren nach Anspruch 6, **dadurch gekennzeichnet, dass** der Substratverbund derart abgelängt wird, dass der transparente Materialabschnitt (112) einen Teil einer Ecke eines Kartenkörpers (108) bildet.

## Claims

1. A card (100) comprising a card body (108) having an upper side (102), a lower side (104), and a card edge (106) connecting the upper side (102) to the lower side (104), which comprises a transparent material section (112) integrally bonded to a non-transparent card base (110), wherein the transparent material section (112) forms a portion of the card edge (106),
**characterized in that**
the transparent material section (112) is asymmetrically shaped.

2. The card (100) according to claim 1, **characterized in that** the transparent material section (112) is part of a corner of the card body (108).

3. The card (100) according to claim 1 or 2, **characterized in that** the transparent material section (112) has a longitudinal extent (114) that is greater than its width (116), and that the transparent material section (112) is arranged along its longitudinal extent (114) on a long edge (118) of the card body (108).

4. The card (100) according to claim 1 or 2, **characterized in that** the transparent material section (112) has a longitudinal extent (114) that is greater than its width (116), and that the transparent material section (112) is arranged along its longitudinal extent (114) at a short edge (120) of the card body (108).

5. An identification, value, or security document in the form of, or comprising, a card (100) according to any one of claims 1 to 4.

6. A method for manufacturing a card (100), comprising the steps of:
- providing a non-transparent substrate (124),
- forming a recess (126) in the non-transparent substrate (124),
- providing a transparent material (128) adapted to the recess (126) in the non-transparent substrate (124),
- inserting the transparent material (128) into the recess (126) in the non-transparent substrate (124),
- bonding the transparent material (128) to the non-transparent substrate (124) to form a composite substrate, and
- cutting the composite substrate to card size such that a transparent material section (112) of the transparent material (128) forms a portion of the card edge (106),
**characterized in that**
the substrate composite is cut to size such that the transparent material section (112) is asymmetrical.

7. The method according to claim 6, **characterized in that** the substrate composite is cut to length such that the transparent material section (112) forms part of a corner of a card body (108).

## Revendications

1. Carte (100) avec un corps de carte (108) comprenant un côté supérieur (102), un côté inférieur (104) et un bord de carte (106) connectant le côté supérieur (102) au côté inférieur (104), qui présente une section de matériau transparente (112) connectée par accouplement de matière à un corps de base de carte non transparent (110), dans laquelle la section de matériau transparente (112) forme une partie du bord de carte (106), **caractérisée en ce que** la section de matériau transparente (112) est formée de manière asymétrique.

2. Carte (100) selon la revendication 1, **caractérisée en ce que** la section de matériau transparente (112) est une partie d'un coin du corps de carte (108).

3. Carte (100) selon la revendication 1 ou 2, **caractérisée en ce que** la section de matériau transparente (112) présente une extension longitudinale (114) qui est supérieure à son extension en largeur (116), et **en ce que** la section de matériau transparente (112) est disposée, le long de son extension longitudinale (114), sur un bord long (118) du corps de carte (108).

4. Carte (100) selon la revendication 1 ou 2, **caractérisée en ce que** la section de matériau transparente (112) présente une extension longitudinale (114) qui est supérieure à son extension en largeur (116), et **en ce que** la section de matériau transparente (112) est disposée, le long de son extension longitudinale (114), sur un bord court (120) du corps de carte (108).

5. Document d'identité, de valeur ou de sécurité sous forme d'une carte ou comprenant une carte (100) selon l'une quelconque des revendications 1 à 4.

6. Procédé de fabrication d'une carte (100), comprenant les étapes suivantes :
- fourniture d'un substrat non transparent (124),
- pratique d'un évidement (126) dans le substrat non transparent (124),
- fourniture d'un matériau transparent (128) adapté à l'évidement (126) dans le substrat non transparent (124),
- introduction du matériau transparent (128) dans l'évidement (126) dans le substrat non transparent (124),
- connexion par accouplement de matière du matériau transparent (128) avec le substrat non transparent (124) en un composite de substrat, et
- sectionnement du composite de substrat à une taille de carte de sorte qu'une section de matériau (112) du matériau transparent (128) forme une partie du bord de carte (106), **caractérisé en ce que** le composite de substrat est sectionné de sorte que la section de matériau transparente (112) se présente de manière asymétrique.

7. Procédé selon la revendication 6, **caractérisé en ce que** le composite de substrat est sectionné de sorte que la section de matériau transparente (112) forme une partie d'un coin d'un corps de carte (108).
